# EUROPEAN PATENT APPLICATION

(11) **EP 4 426 006 A1**
(43) Date of publication of application: **04.09.2024**
(21) Application number: 22900409.8
(22) Date of filing: 28.11.2022
(51) Int. Cl.: H04W 28/14, H04L 67/568, H04W 52/02, H04W 76/28

(54) **COMMUNICATION METHOD AND COMMUNICATION DEVICE**

(30) Priority: 30.11.2021 CN 202111446506
(71) Applicant: Huawei Technologies Co., Ltd., Shenzhen, Guangdong 518129 (CN)
(72) Inventor: PAN, Qi, Shenzhen, Guangdong 518129 (CN); HUANG, Zhenglei, Shenzhen, Guangdong 518129 (CN)
(74) Representative: Thun, Clemens
(86) International application number: PCT/CN2022/134593
(87) International publication number: WO 2023/098605

(57) **Abstract**

Embodiments of this application provide a communication method and a communication apparatus. The method includes: An access network device sends first information, where the first information is used to trigger to buffer downlink data of a terminal in an inactive state in a core network element; and the access network device sends second information, where the second information indicates the terminal to enter the inactive state. According to the method provided in this application, a core network side can help an access network side buffer downlink data of a terminal in an inactive state, so that storage pressure of data buffering on the access network side can be relieved.

## Description

This application claims priority to Chinese Patent Application No. 202111446506.1, filed with the China National Intellectual Property Administration on November 30, 2021 and entitled "COMMUNICATION METHOD AND COMMUNICATION APPARATUS", which is incorporated herein by reference in its entirety.

### TECHNICAL FIELD

Embodiments of this application relate to the communication field, and more specifically, to a communication method and a communication apparatus.

### BACKGROUND

Massive machine type communication (massive machine type communications, mMTC) is one of important application scenarios of a 5th generation (5th generation, 5G) network, and is mainly oriented to various internet of things (internet of things, IoT) service applications based on a cellular network. To meet low power consumption requirements of IoT terminals, an eDRX (extended discontinuous reception, extended discontinuous reception) power saving technology is introduced, so that power consumption of the terminals is greatly reduced, and battery lives are prolonged. In each eDRX cycle, a terminal can receive downlink data within only a specified paging time window. In other time, the terminal is in a sleep state and does not receive downlink data.

In the conventional technology, a radio access network (radio access network, RAN) device configures an eDRX cycle for a terminal in an inactive state, so that the terminal can sleep in the inactive state. When downlink data arrives at a core network, the core network sends the downlink data to the RAN. Then, the RAN pages the terminal in a paging time window of the eDRX cycle, and sends buffered downlink data to the terminal after the paging succeeds, that is, after the terminal enters a connected state from the inactive state. In this case, long-time data buffering increases storage pressure of the RAN.

### SUMMARY

This application provides a communication method and a communication apparatus. A core network side can help an access network side buffer downlink data of a terminal in an inactive state, so that storage pressure of data buffering on the access network side can be relieved.

According to a first aspect, a communication method is provided. The method may be performed by an access network device, or may be performed by a component (for example, a chip or a circuit) of an access network device. This is not limited. For ease of description, the following uses an example in which the method is performed by an access network device for description.

The method may include: The access network device sends first information, where the first information is used to trigger to buffer downlink data of a terminal in an inactive state in a core network element; and the access network device sends second information to the terminal, where the second information indicates the terminal to enter the inactive state.

For example, the core network element herein may be a session management function network element, or may be a user plane function network element.

In the foregoing technical solution, the access network device sends the first information, so that it can be ensured that a core network can perceive a state change of UE, that is, the core network element can perceive that the UE enters an inactive state from a connected state, and help an access network side buffer the downlink data in the inactive state. In this way, storage pressure of data buffering on the access network side can be relieved.

With reference to the first aspect, in some implementations of the first aspect, the first information includes an eDRX parameter, the eDRX parameter is used by the terminal to sleep in the inactive state, and the eDRX parameter includes an eDRX cycle; or the first information includes first duration, and the first duration is time determined by the access network device for indicating to buffer the downlink data of the terminal in the inactive state in the core network element.

With reference to the first aspect, in some implementations of the first aspect, that the access network device sends first information includes: The access network device sends the first information when an eDRX cycle is greater than or equal to a first cycle threshold. For example, the first cycle threshold is 10.24s.

With reference to the first aspect, in some implementations of the first aspect, that the access network device sends first information includes: The access network device sends the first information to an access and mobility management function network element, where the first information is used to trigger the access and mobility management function network element to determine to buffer the downlink data of the terminal in the inactive state in the core network element.

With reference to the first aspect, in some implementations of the first aspect, the method further includes: The access network device sends first indication information when the terminal enters a connected state, where the first indication information indicates that the terminal is in the connected state.

With reference to the first aspect, in some implementations of the first aspect, the method further includes: The access network device receives second indication information, where the second indication information indicates that the downlink data of the terminal is buffered in the core network element; and the access network device pages the terminal based on the second indication information.

According to a second aspect, a communication method is provided. The method may be performed by an access and mobility management function network element, or may be performed by a component (for example, a chip or a circuit) of an access and mobility management function network element. This is not limited. For ease of description, the following uses an example in which the method is performed by an access and mobility management function network element for description.

The method may include: The access and mobility management function network element receives first information from an access network device, where the first information is used to trigger to buffer downlink data of a terminal in an inactive state in a core network element; and the access and mobility management function network element sends third indication information to the core network element based on the first information, where the third indication information indicates to buffer the downlink data of the terminal in the inactive state in the core network element.

For example, the core network element herein may be a session management function network element, or may be a user plane function network element.

For beneficial effects of the second aspect, refer to the description in the first aspect. Details are not described herein again.

With reference to the second aspect, in some implementations of the second aspect, the first information includes an eDRX parameter, the eDRX parameter is used by the terminal to sleep in the inactive state, and the eDRX parameter includes an eDRX cycle; or the first information includes first duration, and the first duration is duration determined by the access network device for buffering the downlink data of the terminal in the inactive state in the core network element.

With reference to the second aspect, in some implementations of the second aspect, the method further includes: The access and mobility management function network element sends second duration to a session management function network element, where the second duration is used to determine third duration, the third duration is duration determined by the session management function network element for buffering the downlink data of the terminal in the inactive state in the core network element, and the second duration is duration determined by the access and mobility management function network element for buffering the downlink data of the terminal in the inactive state in the core network element.

With reference to the second aspect, in some implementations of the second aspect, the method further includes: The access and mobility management function network element determines the second duration based on the first information.

With reference to the second aspect, in some implementations of the second aspect, the method further includes: The access and mobility management function network element sends first query information to the session management function network element, where the first query information is used to query whether the core network element supports buffering of the downlink data of the terminal in the inactive state; and the access and mobility management function network element receives fourth indication information from the session management function network element, where the fourth indication information is used to confirm that the core network element supports buffering of the downlink data of the terminal in the inactive state.

According to a third aspect, a communication method is provided. The method may be performed by a core network element, or may be performed by a component (for example, a chip or a circuit) of a core network element. This is not limited. For ease of description, the following uses an example in which the method is performed by a core network element for description.

The method may include: The core network element receives third indication information, where the third indication information indicates to buffer downlink data of a terminal in an inactive state in the core network element; and the core network element buffers the downlink data of the terminal in the inactive state in the core network element based on the third indication information.

For example, the core network element is a session management function network element or a user plane function network element.

In the foregoing technical solution, a core network receives the third indication information, so that it can be ensured that the core network perceives a state change of UE, that is, the core network element can perceive that the UE enters an inactive state from a connected state, and help an access network device buffer the downlink data in the inactive state. In this way, storage pressure of data buffering in the access network device can be relieved.

With reference to the third aspect, in some implementations of the third aspect, the method further includes: The core network element receives first indication information, where the first indication information indicates that the terminal is in a connected state; and the core network element sends, to an access network device based on the first indication information, the downlink data of the terminal buffered in the core network element.

With reference to the third aspect, in some implementations of the third aspect, the method further includes: The core network element sends fifth indication information when the downlink data of the terminal arrives at the core network element, where the fifth indication information indicates that the downlink data of the terminal arrives at the core network element and the core network element has started to buffer the downlink data of the terminal.

With reference to the third aspect, in some implementations of the third aspect, the method further includes: The core network element directly delivers or discards the buffered downlink data of the terminal when buffering time of the downlink data of the terminal in the inactive state in the core network element exceeds third duration, where the third duration is duration determined by a session management function network element for buffering the downlink data of the terminal in the inactive state in the core network element.

With reference to the third aspect, in some implementations of the third aspect, the core network element is a session management function network element, and the method further includes: The core network element receives first query information from an access and mobility management function network element, where the first query information is used to query whether the core network element supports buffering of the downlink data of the terminal; and the core network element sends fourth indication information to the access and mobility management function network element, where the fourth indication information is used to confirm that the core network element supports buffering of the downlink data of the terminal in the inactive state.

According to a fourth aspect, a communication apparatus is provided. The apparatus is configured to perform the method provided in the first aspect, the second aspect, or the third aspect. Specifically, the apparatus may include units and/or modules configured to perform the method in the first aspect, the second aspect, or the third aspect and any one of the possible implementations of the first aspect, the second aspect, or the third aspect, for example, a processing unit and/or a communication unit.

In an implementation, the apparatus is a device or a network element. When the apparatus is a device or a network element, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in a device or a network element. When the apparatus is a chip, a chip system, or a circuit used in a terminal device, the communication unit may be an input/output interface, an interface circuit, an output circuit, an input circuit, a pin, a related circuit, or the like on the chip, the chip system, or the circuit; and the processing unit may be at least one processor, a processing circuit, a logic circuit, or the like.

According to a fifth aspect, a communication apparatus is provided. The apparatus includes at least one processor, the at least one processor is coupled to at least one memory, the at least one memory is configured to store a computer program or instructions, and the at least one processor is configured to invoke the computer program or the instructions from the at least one memory and run the computer program or the instructions, so that the communication apparatus performs the method in the first aspect, the second aspect, or the third aspect and any one of the possible implementations of the first aspect, the second aspect, or the third aspect.

In an implementation, the apparatus is a device or a network element.

In another implementation, the apparatus is a chip, a chip system, or a circuit used in a device or a network element.

According to a sixth aspect, this application provides a processor, configured to perform the method provided in the foregoing aspects.

Operations such as sending and obtaining/receiving related to the processor may be understood as operations such as output and receiving or input of the processor, or operations such as sending and receiving performed by a radio frequency circuit and an antenna, unless otherwise specified, or provided that the operations do not contradict actual functions or internal logic of the operations in related descriptions. This is not limited in this application.

According to a seventh aspect, this application provides a computer-readable medium. The computer-readable medium stores a computer program (which may also be referred to as code or instructions). When the computer program runs on a computer, the computer is enabled to perform the method in the foregoing aspects.

According to an eighth aspect, this application provides a computer program product. The computer program product includes a computer program (which may also be referred to as code or instructions). When the computer program runs, a computer is enabled to perform the method in the foregoing aspects.

According to a ninth aspect, this application provides a communication system, including the foregoing access network device, access and mobility management function network element, session management function network element, and user plane function network element, or including the foregoing access network device, access and mobility management function network element, and session management function network element.

### BRIEF DESCRIPTION OF DRAWINGS

FIG. 1 is a schematic of a network architecture applicable to an embodiment of this application;
FIG. 2 is a schematic flowchart of a communication method according to this application;
FIG. 3 is a schematic flowchart of another communication method according to this application;
FIG. 4 is a schematic flowchart of another communication method according to this application;
FIG. 5 is a schematic flowchart of another communication method according to this application;
FIG. 6 is a block diagram of a communication apparatus 1100 according to an embodiment of this application; and
FIG. 7 is a block diagram of a communication device 1200 according to an embodiment of this application.

### DESCRIPTION OF EMBODIMENTS

The following describes technical solutions of this application with reference to accompanying drawings.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system, a new radio (new radio, NR) system, or a future network. The 5G mobile communication system described in this application includes a non-standalone (non-standalone, NSA) 5G mobile communication system or a standalone (standalone, SA) 5G mobile communication system. The technical solutions provided in this application may be further applied to a future communication system, for example, a 6th generation mobile communication system. Alternatively, the communication system may be a public land mobile network (public land mobile network, PLMN), a device-to-device (device-to-device, D2D) communication system, a machine-to-machine (machine-to-machine, M2M) communication system, an internet of things (internet of Things, IoT) communication system, or another communication system.

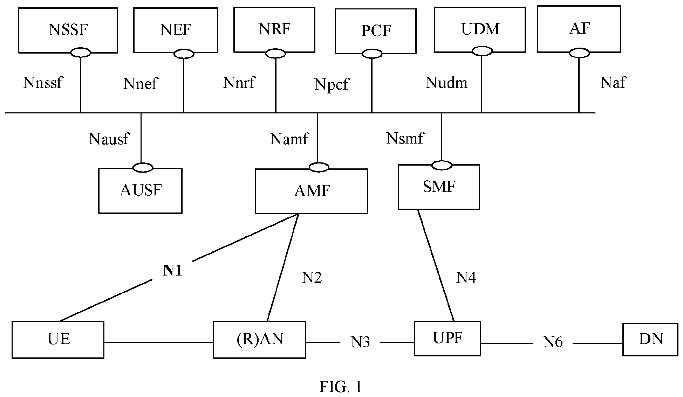

FIG. 1 is a schematic of a network architecture applicable to an embodiment of this application.

As shown in FIG. 1, a 5G system (the 5th generation system, 5GS) is used as an example of the network architecture. The network architecture may include but is not limited to: a network slice selection function (network slice selection function, NSSF), an authentication server function (authentication server function, AUSF), unified data management (unified data management, UDM), a network exposure function (network exposure function, NEF), a network repository function (NF repository function, NRF), a policy control function (policy control function, PCF), an application function (application function, AF), an access and mobility management function (access and mobility management function, AMF), a session management function (session management function, SMF), user equipment (user equipment, UE), a radio access network device, a user plane function (user plane function, UPF), and a data network (data network, DN).

The DN may be the internet. The NSSF, the AUSF, the UDM, the NEF, the NRF, the PCF, the AF, the AMF, the SMF, and the UPF are network elements in a core network. Because a 5G system is used as an example in FIG. 1, the core network may be referred to as a 5G core network (5G core network, 5GC or 5GCN).

The following briefly describes network elements shown in FIG. 1.
1. User equipment (user equipment, UE): may include various handheld devices with a wireless communication function, a vehicle-mounted device, a wearable device, a computing device or another processing device connected to a wireless modem, and various forms of terminals, mobile stations (mobile station, MS), terminals (terminal), or soft terminals, for example, a water meter, an electric meter, and a sensor.

For example, the user equipment in embodiments of this application may be an access terminal, a subscriber unit, a subscriber station, a mobile station, a relay station, a remote station, a remote terminal, a mobile device, a user terminal (user terminal), terminal equipment (terminal equipment), a wireless communication device, a user agent, or a user apparatus. The user equipment may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, user equipment in a 5G network, user equipment in a future evolved public land mobile network (public land mobile network, PLMN), user equipment in the future internet of vehicles, or the like. This is not limited in embodiments of this application.

By way of example and not limitation, in embodiments of this application, the wearable device may also be referred to as a wearable intelligent device or the like, and is a general term of wearable devices that are intelligently designed and developed for daily wear by using a wearable technology, for example, glasses, gloves, watches, clothes, and shoes. The wearable device is a portable device that is directly worn on a body or integrated into clothes or an accessory of a user. The wearable device is not only a hardware device, but also implements a powerful function through software support, data exchange, and cloud interaction. Generalized wearable intelligent devices include full-featured and large-sized devices that can implement complete or partial functions without depending on a smartphone, for example, a smartwatch or smart glasses, and devices that focus on only one type of application function and need to work with another device such as a smartphone, for example, various smart bands or smart jewelry for monitoring physical signs.

In addition, in embodiments of this application, the user equipment may alternatively be user equipment in an internet of things system. IoT is an important part of future information technology development. A main technical feature of IoT is that an article is connected to a network by using a communication technology, to implement an intelligent network of man-machine interconnection and interconnection between things. In embodiments of this application, the IoT technology can implement massive connections, deep coverage, and terminal power saving by using, for example, a narrow band (narrow band, NB) technology. In addition, in embodiments of this application, the user equipment may alternatively include a sensor such as an intelligent printer, a train detector, or a gas station. Main functions include collecting data (some user equipment), receiving control information and downlink data from an access network device, sending an electromagnetic wave, and transmitting uplink data to the access network device.

2. (Radio) access network (radio access network, (R)AN) device: is configured to provide a network access function for authorized user equipment in a specific area, and can use transmission tunnels with different quality based on user equipment levels, service requirements, and the like.

The (R)AN can manage radio resources and provide an access service for user equipment, to forward a control signal and user equipment data between the user equipment and a core network. The (R)AN may also be understood as a base station in a conventional network.

For example, the access network device in embodiments of this application may be any communication device with wireless sending and receiving functions for communicating with user equipment. The access network device includes but is not limited to: an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (home evolved NodeB, HeNB, or home NodeB, HNB), a baseband unit (baseBand unit, BBU), or an access point (access point, AP), a wireless relay node, a wireless backhaul node, a transmission point (transmission point, TP), a transmission and reception point (transmission and reception point, TRP), or the like in a wireless fidelity (wireless fidelity, Wi-Fi) system, or may be a gNB or a transmission point (TRP or TP) in a 5G system such as an NR system, or one antenna panel or a group of antenna panels (including a plurality of antenna panels) of a base station in a 5G system, or may be a network node that forms a gNB or a transmission point, for example, a baseband unit (BBU) or a distributed unit (distributed unit, DU).

In some deployments, the gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implementing functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the access network device may be a device including one or more of a CU node, a DU node, and an AAU node. In addition, the CU may be classified into an access network device in an access network (radio access network, RAN), or the CU may be classified into an access network device in a core network (core network, CN). This is not limited in this application.

3. AMF: is mainly used for functions such as access control, mobility management, registration, and deregistration.

4. SMF: is mainly used for user plane network element selection, user plane network element redirection, internet protocol (internet protocol, IP) address allocation for a terminal device, session establishment, modification, and release, and QoS control.

5. UPF: is mainly used for receiving and forwarding of user plane data. For example, the UPF may receive user plane data from a DN, and send the user plane data to a terminal device through an AN device. The UPF may further receive user plane data from the terminal device through the AN device, and forward the user plane data to the DN.

6. NEF: is mainly configured to securely expose, to the outside, a service, a capability, and the like that are provided by a 3GPP network function.

7. PCF: is mainly configured to guide a unified policy framework for network behavior, and provide policy rule information and the like for a control plane network element (for example, an AMF or an SMF).

8. AF: is mainly configured to provide a service for a 3GPP network, for example, interact with a PCF to perform policy control.

9. Network slice selection function (network slice selection function, NSSF): is mainly used for network slice selection.

10. UDM: is mainly used for subscription data management of UE, including storage and management of a UE identifier, access authorization of the UE, and the like.

11. DN: is mainly used for an operator network that provides a data service for UE, for example, the internet (Internet), a third-party service network, and an IP multimedia service (IP multimedia service, IMS) network.

12. AUSF: is mainly used for user authentication and the like.

13. NRF: is mainly configured to store a network function entity, description information of a service provided by the network function entity, and the like.

In the network architecture, an N1 interface is a reference point between a terminal and the AMF entity; an N2 interface is a reference point between the (R)AN and the AMF entity, and is used to send a non-access stratum (non-access stratum, NAS) message and so on; an N3 interface is a reference point between the (R)AN and the UPF entity, and is used to transmit user plane data and so on; an N4 interface is a reference point between the SMF entity and the UPF entity, and is used to transmit information such as tunnel identifier information of an N3 connection, data buffering indication information, and a downlink data notification message; and an N6 interface is a reference point between the UPF entity and the DN, and is used to transmit user plane data and so on.

It should be understood that names of the network elements and the communication interfaces between the network elements in FIG. 1 are briefly described by using those specified in a current protocol as an example. However, embodiments of this application are not limited to being applicable to only a currently known communication system. Therefore, standard names that appear when the current protocol is used as an example for description are all functional descriptions. A specific name of a network element, an interface, signaling, or the like is not limited in this application, indicates only a function of the network element, the interface, or the signaling, and may be correspondingly extended to another system.

It should be further understood that the foregoing network architecture applicable to embodiments of this application in FIG. 1 is merely an example for description, and a network architecture applicable to embodiments of this application is not limited thereto. Any network architecture that can implement functions of the foregoing network elements is applicable to embodiments of this application.

It should be further understood that functions or network elements such as the AMF, the SMF, the UPF, the PCF, the UDM, the NSSF, and the AUSF shown in FIG. 1 may be understood as network elements configured to implement different functions, for example, may be combined into a network slice as required. These network elements may be independent devices, or may be integrated into a same device to implement different functions, or may be network components in a hardware device, or may be software functions running on dedicated hardware, or may be instantiated virtualization functions on a platform (for example, a cloud platform). Specific forms of the network elements are not limited in this application.

It should be further understood that the foregoing names are defined merely for distinguishing between different functions, and should not constitute any limitation on this application. This application does not exclude a possibility of using other names in a 6G network and other networks in the future. For example, in a 6G network, some or all of the foregoing network elements may still use terms in 5G, or may use other names.

To better understand embodiments of this application, the following first describes concepts in embodiments of this application.
1. UE connection management (connection management, CM) states include an idle state (CM-IDLE), a connected state with an inactive state (CM-CONNECTED with RRC_INACTIVE), and a connected state (CM-CONNECTED). There are only two states: the idle state and the connected state, in LTE originally. The inactive state is introduced to reduce signaling and power consumption. A main reason affecting power consumption of a mobile phone is connection to a network. 5G is oriented to the internet of everything, and network connection is a key to power consumption when a rate requirement is high. In addition, if a large quantity of devices sporadically transmit a small amount of data, excessive signaling overheads are caused. To balance power consumption and quick access, and reduce signaling overheads, the inactive state is introduced. In the inactive state, some RRC and NAS contexts are still retained in UE, a base station, and a core network. In this case, a state of the UE is almost the same as the idle state. In addition, the UE can quickly switch from the inactive state to the connected state, thereby reducing signaling overheads.

It should be understood that the CM state may be considered as an RRC state of the UE that is perceived by a core network side. The following briefly describes three RRC states.
(1) RRC_IDLE (idle mode): ARAN does not have a context of UE, and there is no signaling connection between the UE and the RAN. In this state, the UE can receive a system message and a paging message, and perform cell selection and reselection. When the UE needs to establish a connection to a network for a specific purpose (service request, location update, paging, or the like), the UE triggers RRC connection establishment. After an RRC connection is established, the UE enters an RRC connected state.
(2) RRC_INACTIVE (inactive mode): A connection is maintained between a RAN and a core network, and no resource is allocated to an air interface, so that a service can be quickly restored, and experience for a latency-sensitive application can be improved. In addition, power saving effect of a user in the inactive state can be close to that in the idle state, and a battery life of a mobile phone is prolonged.
(3) RRC_CONNECTED (connected mode): A RAN has a context of UE, and there is a signaling connection between the UE and the RAN. The UE can receive a message for controlling the UE to perform data transmission and handover and notifying the UE of related scheduling information and a system message that are delivered by the RAN, and the RAN can receive channel quality information fed back by the UE.

It should be noted that, in the connected state, a connection is maintained between the UE and the RAN, and a connection is also maintained between the RAN and the core network. In the inactive state, the UE is disconnected from the RAN, and a connection is maintained between the RAN and the core network. Therefore, when the UE enters the inactive state from the connected state, the RAN perceives that the UE is disconnected from the RAN, and a connection is still maintained between the RAN and the core network. In other words, the RAN can perceive that the UE is in the inactive state, but the core network can perceive only that the core network and the RAN are still in the connected state. Therefore, the core network cannot perceive that the UE is in the inactive state, and considers that the UE is still in the connected state.

2. Discontinuous reception (discontinuous reception, DRX): For an internet of things service with infrequent data sending, data sending is usually bursty. When no data is transmitted, a receive circuit of UE may be turned off to reduce power consumption, thereby increasing a battery life. In each DRX cycle, a terminal detects once whether a downlink service arrives. One DRX cycle is equal to a sum of UE wake-up time and UE sleep time. The UE wake-up time is time in which UE monitors a paging channel. During this period of time, the UE is in a wake-up state. The UE sleep time is time in which the UE sleeps and does not monitor a paging channel, to save power. During this period of time, the UE is in a sleep state. Because the DRX cycle is short, for example, the cycle may be 1.28s, 2.56s, 5.12s, or 10.24s, it may be considered that a downlink service is reachable at any time. Therefore, DRX is applicable to a service that has a high requirement on a latency, but power consumption is high.

3. eDRX: eDRX has a same function as DRX. In both eDRX and DRX, UE periodically enters a sleep state at some moments to reduce battery consumption. In an IoT system, a low-rate and low-frequency service requires UE to have extremely low power consumption. To further reduce energy consumption of the UE and meet a requirement of an IoT device for extremely low power consumption, eDRX is introduced to cope with a service feature of the IoT device. eDRX is an enhancement to DRX, and supports longer sleep time, so that power consumption of the UE is significantly reduced. Each eDRX cycle includes several DRX cycles, and the several DRX cycles form a paging time window (paging time window, PTW). A value of the paging time window determines a size of the window and a quantity of paging times. UE monitors a paging channel based on the DRX cycle (the DRX cycle is short, and it may be considered that a terminal does not sleep and is always reachable) in the PTW. In remaining time in the eDRX cycle, the UE is in a sleep state and does not receive downlink data. Currently, an eDRX cycle in an inactive state usually does not exceed 10.24s.

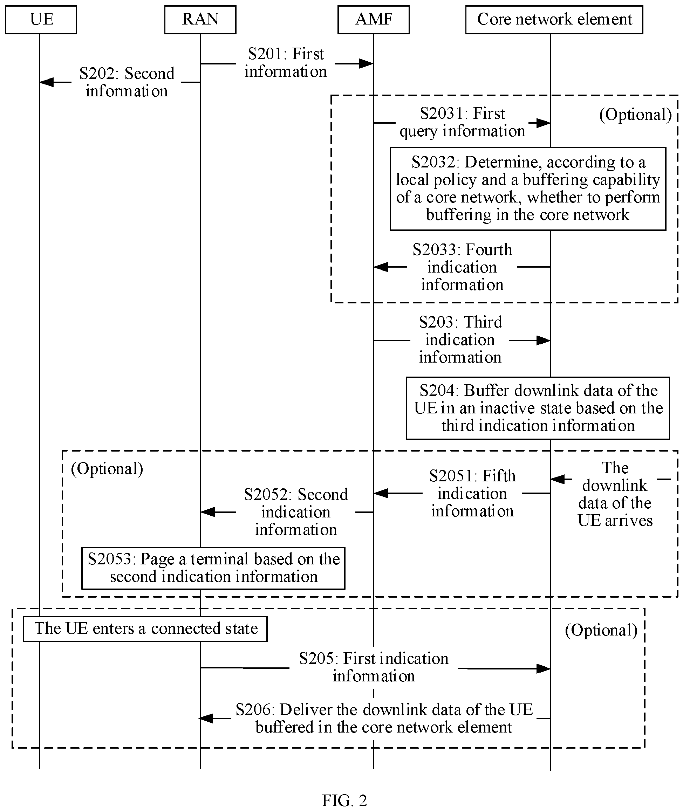

Refer to FIG. 2. FIG. 2 is a schematic flowchart of a communication method according to this application. For ease of description, the network elements shown in FIG. 1 are used as an example for description in this embodiment of this application.

S201: A RAN sends first information, where the first information is used to trigger to buffer downlink data of UE in an inactive state in a core network element. For ease of understanding, an example in which the RAN sends the first information to an AMF is used for description in this step.

Correspondingly, the AMF receives the first information from the RAN. Optionally, the AMF determines, based on the first information, to buffer the downlink data of the UE in the core network element.

For example, there may be two implementations in which the first information is used to trigger to buffer the downlink data of the UE in the inactive state in the core network element.

First implementation: The RAN explicitly notifies, by using the first information, the AMF to buffer the downlink data of the UE in the inactive state in the core network element. For example, the first information is indication information A, and the indication information A indicates the AMF to buffer the downlink data of the UE in the inactive state in the core network element.

Second implementation: The RAN implicitly notifies, by using a parameter included in the first information, the AMF to buffer the downlink data of the UE in the inactive state in the core network element. The following provides examples of two manners of implicit indication of the first information.
(1) The first information includes an eDRX parameter in the inactive state, the eDRX parameter includes an eDRX cycle, and the eDRX parameter is used by the terminal to sleep in the inactive state. The eDRX parameter is used to trigger to buffer the downlink data of the UE in the inactive state in the core network element.

That the eDRX parameter is used by the terminal to sleep in the inactive state may be understood as that the terminal sleeps in the inactive state based on the eDRX parameter. Specifically, in each eDRX cycle, the terminal receives downlink data in only a paging time window of the eDRX cycle. In other time, the terminal is in a sleep state and does not receive downlink data.

In a specific implementation, the method further includes: The RAN determines the eDRX parameter in the inactive state. For example, the terminal completes negotiation for an eDRX parameter in an idle state with the AMF in a registration procedure. Then, the AMF delivers the eDRX parameter in the idle state to a RAN side, and the RAN side determines the eDRX parameter in the inactive state based on the eDRX parameter in the idle state. The eDRX parameter in the idle state indicates an eDRX parameter used in the idle state, and the eDRX parameter in the inactive state indicates an eDRX parameter used in the inactive state. For example, the RAN learns that an eDRX cycle in the idle state is 10.24s, and the RAN determines that the eDRX cycle in the inactive state is less than or equal to 10.24. For example, the RAN determines that the eDRX cycle in the inactive state is 5.12s.

(2) The first information includes first duration, and the first duration is time for buffering the downlink data of the UE in the inactive state in the core network element. The first duration is used to trigger to buffer the downlink data of the UE in the inactive state in the core network element. Optionally, the method further includes: The RAN determines the first duration.

Optionally, the RAN determines the first duration based on an eDRX cycle in the inactive state. For example, if the RAN determines, based on a capability of the RAN, to buffer data in a core network, the RAN may estimate the first duration based on an eDRX parameter in the inactive state. For example, the first duration is greater than or equal to the eDRX cycle in the inactive state.

Optionally, the core network element for buffering the downlink data of the UE in the inactive state may be an SMF, or may be a UPF. This is not specifically limited in this application.

Optionally, when the eDRX cycle in the inactive state is greater than or equal to a first cycle threshold, the RAN sends the first information to the AMF.

Optionally, the first cycle threshold may be locally configured by a system, or may be specified in a protocol, or may be from another network element or a third party. This is not limited in this application. For example, the first cycle threshold may be 10.24s.

S202: The RAN sends second information to the UE, where the second information indicates the UE to enter the inactive state.

Optionally, S202 may be performed after S201. A reason is as follows: If a core network side agrees to perform buffering, the downlink data of the UE is buffered in the core network; or if a core network side does not agree to perform buffering, the core network still delivers received data of the UE to the RAN side, and whether the UE enters the inactive state is not affected.

Optionally, S202 may alternatively be performed after the RAN receives a feedback message indicating whether the core network determines to perform buffering. For example, before S202, the method further includes: The RAN receives a feedback message from the AMF, where the feedback message indicates whether the core network supports buffering of the downlink data of the UE in the inactive state; and the RAN determines the second information based on the feedback message.

S203: The AMF sends third indication information to the core network element based on the first information, where the third indication information indicates to buffer the downlink data of the UE in the inactive state in the core network element. Correspondingly, the core network element receives the third indication information from the AMF.

It may be understood that when the core network element is an SMF, the SMF may receive the third indication information from the AMF; or when the core network element is a UPF, the UPF may receive the third indication information from the AMF through an SMF.

That the AMF sends the third indication information to the core network element based on the first information includes: The AMF determines, based on the first information, that the core network element supports buffering of the downlink data of the UE in the inactive state, and then the AMF sends the third indication information to the core network element.

Optionally, if the first information includes the eDRX parameter, the AMF may determine, based on the eDRX parameter, to buffer the downlink data of the UE in the inactive state on the core network side.

Optionally, if the first information includes the eDRX parameter, the AMF may determine, based on both the eDRX parameter and another parameter, to buffer the downlink data of the UE in the inactive state on the core network side. For example, the another parameter is one or more of information such as a service feature of the UE and a capability of the RAN.

Optionally, before the AMF determines, based on the first information, to buffer the data in the core network element, the AMF may further negotiate with an SMF to determine whether to buffer the data in the core network. Specifically, the method further includes S2031 to S2033. In this case, a core network element corresponding to S2031 to S2033 in FIG. 2 is the SMF.

S2031: The AMF sends first query information to the SMF, where the first query information is used to query whether the core network element supports buffering of the downlink data of the UE in the inactive state. Correspondingly, the SMF receives the first query information from the AMF.

S2032: The SMF determines, according to a local policy and a buffering capability of the SMF or a UPF, whether to buffer the downlink data of the UE in the inactive state in the core network.

The local policy is a policy configured by an operator on a network element side, and is used to provide guidance for the SMF to perform some operations. In this scenario, the local policy may be a policy for determining, for UE in a current PLMN, whether buffering can be performed in the core network. The buffering capability is a capability indicating whether a network element supports data buffering.

S2033: The SMF sends fourth indication information to the AMF, where the fourth indication information is used to confirm whether the core network element supports buffering of the downlink data of the UE in the inactive state. Correspondingly, the AMF receives the fourth indication information from the SMF.

Optionally, the AMF may determine second duration based on the first information. The second duration is duration determined by the AMF for buffering the downlink data of the UE in the inactive state in the core network element or duration required by the UE to enter a reachable state (the reachable state means duration required for paging the UE). For example, when the first information includes the eDRX parameter, the AMF determines the second duration based on the eDRX parameter; or when the first information includes the first duration, the AMF determines the second duration based on the first duration. Optionally, the second duration is the same as the first duration.

Optionally, the AMF further sends the second duration to the SMF, and the SMF determines third duration based on the second duration. The third duration is duration determined by the SMF for buffering the downlink data of the UE in the inactive state in the core network element.

It may be understood that, when the SMF performs buffering, the SMF determines the third duration based on the second duration, and the third duration herein is specifically duration for buffering the downlink data of the UE by the SMF. When the UPF performs buffering, the SMF determines the third duration based on the second duration, and the third duration herein is duration for buffering the downlink data of the UE by the UPF.

S204: The core network element buffers the downlink data of the UE in the inactive state based on the third indication information.

It should be understood that the core network element herein is a network element that receives the third indication information and actually buffers the data. In other words, if the core network element in step S203 is an SMF, the core network element in step S204 is the SMF; or if the core network element in step S203 is a UPF, the core network element in step S204 is the UPF.

In the foregoing technical solution, through information exchange between the RAN and the AMF, the core network can perceive a CM state change of the UE, that is, the core network element can perceive that the UE enters the inactive state from a connected state, and share data buffering pressure on an access network side. In addition, after the UE in the inactive state moves out of a current cell, if there is no Xn interface between an original base station that buffers data and a target base station, according to the solution of this application, downlink data of the UE in an eDRX state is buffered in the core network, and the core network may deliver the buffered data to the target base station to which the UE moves, thereby improving data transmission continuity and reducing signaling exchange in a UE movement scenario.

Optionally, after the core network buffers the downlink data of the UE, the solution further includes: The core network delivers the buffered data to the UE. Still with reference to FIG. 2, the following describes a procedure in which the core network element delivers the buffered downlink data of the UE.

S205: When the UE enters a connected state, the RAN sends first indication information, where the first indication information indicates that the UE is in the connected state. Herein, an example in which the RAN sends the first indication information to the core network element through the AMF is used.

Correspondingly, the core network element receives the first indication information through the AMF, where the first indication information indicates that the UE is in the connected state.

It may be understood that when the core network element is an SMF, the RAN may send the first indication information to the SMF through the AMF. When the core network element is a UPF, the RAN may first send the first indication information to the SMF through the AMF, and then the SMF sends the first indication information to the UPF.

Optionally, the UE actively enters the connected state due to a reason such as a RAN notification area update (RAN notification area update, RNAU) or uplink data triggering.

Optionally, the UE may passively enter the connected state through paging of the RAN.

In an implementation, if the UE passively enters the connected state, before S205, the method further includes S2051 to S2053.

S2051: The core network element sends fifth indication information when the downlink data of the UE arrives at the core network element, where the fifth indication information indicates that the downlink data of the UE arrives at the core network and the core network element has started to buffer the downlink data of the UE. For ease of description, an example in which the core network element sends the fifth indication information to the AMF is used herein for description.

It may be understood that when the core network element is an SMF, the SMF detects that the downlink data of the UE arrives, starts to buffer the downlink data, and sends the fifth indication information to the AMF. When the core network element is a UPF, the UPF detects that the downlink data of the UE arrives, starts to buffer the downlink data, and sends a downlink data arrival notification to the SMF, and the SMF sends the fifth indication information to the AMF.

S2052: The AMF sends second indication information to the RAN, where the second indication information indicates that the downlink data of the UE is buffered in the core network element. Correspondingly, the RAN receives the second indication information from the AMF.

It may be understood that the second indication information is determined based on the fifth indication information.

S2053: The RAN pages the UE based on the second indication information.

Specifically, the RAN determines, based on the second indication information, that the core network side has buffered downlink data of the UE to be sent, and the corresponding UE needs to be paged. Then, the RAN calculates a paging slot based on the eDRX parameter in the inactive state, and broadcasts a paging message in the corresponding paging slot. The UE monitors the paging message in a paging slot in a corresponding paging time window, and enters the connected state based on the paging message.

S206: The core network element sends, to the RAN based on the first indication information, the downlink data of the UE in the inactive state that is buffered in the core network element.

Correspondingly, the RAN receives the downlink data of the UE buffered in the core network element, and forwards the downlink data to the UE.

It should be understood that, after the core network element receives the first indication information, the core network element stops buffering the downlink data of the UE. If downlink data of the UE arrives at this time, the core network element directly forwards the downlink data to the RAN.

Optionally, if the core network element does not receive the first indication information, and buffering time of the downlink data of the UE in the core network element exceeds the third duration, the core network element directly delivers or discards the buffered data. For example, if the UPF receives downlink data #1 of the UE at a first moment, the third duration starts to take effect. If the UPF does not receive, within a time period of the third duration starting from the first moment, indication information for delivering buffered data, the UPF directly delivers or discards the downlink data #1.

In the foregoing technical solution, when the downlink data of the UE is buffered in the core network element, the buffered downlink data is delivered to the UE by triggering a paging procedure on a RAN side or determining that the terminal has entered the connected state. In this way, the core network element buffers the downlink data, and data buffering pressure of the RAN is reduced.

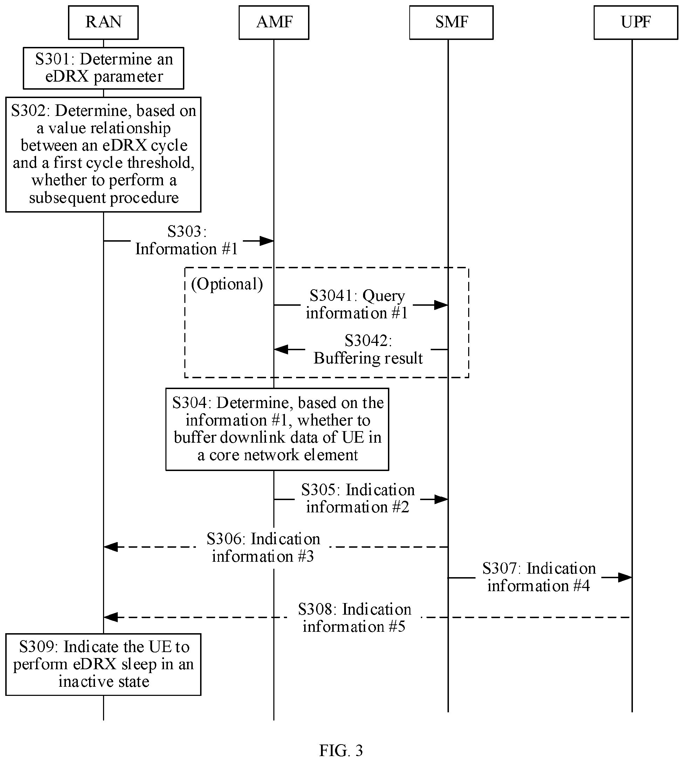

The following provides a possible specific implementation procedure of S201 to S204 with reference to FIG. 3.

S301: A RAN determines an eDRX parameter of UE in an inactive state. The eDRX parameter includes an eDRX cycle.

Optionally, the RAN determines the eDRX parameter in the inactive state based on an eDRX parameter of the UE in an idle state and downlink data transmission traffic of the UE.

S302: Before the RAN prepares to drive the UE to enter the inactive state, the RAN determines, based on a value relationship between the eDRX cycle in the inactive state and a first cycle threshold, whether to perform a subsequent procedure.

In an implementation, when the eDRX cycle is greater than the first cycle threshold, S303 is performed.

In another implementation, when the eDRX cycle is less than the first cycle threshold, the subsequent procedure does not need to be performed, and an existing procedure may be performed.

Optionally, when the eDRX cycle is equal to the first cycle threshold, S303 may be performed, or an existing procedure may be performed. This is not specifically limited in this application.

S303: The RAN sends information #1 to an AMF network element. Correspondingly, the AMF network element receives the information #1 from the RAN.

The information #1 is the same as the first information in S201. For details, refer to the description of the first information. Details are not described herein again.

S304: The AMF network element determines, based on the information #1, whether to buffer downlink data of the UE in a core network element.

Optionally, if the information #1 includes the eDRX parameter, the AMF may determine, based on the eDRX parameter and the downlink data transmission traffic of the UE, whether to buffer the data in the core network element.

If the AMF determines, based on the information #1, that the downlink data of the UE cannot be buffered in the core network element, the AMF sends indication information #1 to the RAN, where the indication information #1 indicates that the downlink data of the UE cannot be buffered in the core network element.

If the AMF determines, based on the information #1, to buffer the downlink data of the UE in the core network element, S305 is performed.

Optionally, before determining, based on the information #1, whether to perform buffering in the core network element, the AMF may further negotiate with an SMF. In this case, the method further includes the following steps.

S3041: The AMF sends query information #1 to the SMF, where the query information #1 is used to query whether the core network element supports buffering. Correspondingly, the SMF receives the query information #1 sent by the AMF.

S3042: The SMF determines whether buffering on a core network side is supported, and notifies the AMF of a result about whether buffering is supported.

Optionally, the SMF determines, according to a local policy and a buffering capability of the SMF or a UPF/NEF, whether to perform buffering in the core network.

S305: The AMF sends indication information #2 to the SMF, where the indication information #2 indicates to buffer the downlink data of the terminal in the inactive state in the core network element. Correspondingly, the SMF receives the indication information #2 sent by the AMF.

Optionally, the AMF may further send second duration to the SMF, where the second duration is used by the SMF to determine third duration, the third duration is duration for buffering the downlink data of the terminal in the core network element, and the second duration is duration determined by the AMF based on the eDRX parameter or the first duration for buffering the downlink data of the terminal in the core network element or duration required by the UE to enter a network reachable state.

It may be understood that before receiving the indication information #2, the SMF considers that the UE is in a connected state, and after receiving the indication information #2, the SMF may consider that the UE is in the inactive state.

It should be noted that, after receiving the indication information #2, the SMF further needs to determine whether buffering is specifically performed in the SMF, the UPF, or the NEF.

S306: The SMF sends indication information #3 to the RAN through the AMF, where the indication information #3 is used to confirm that the downlink data of the UE is buffered in the core network element.

Optionally, the SMF may further notify the RAN whether buffering is specifically performed in the SMF or the UPF. This is not specifically limited in this application.

Optionally, when the SMF determines to perform buffering in the SMF, the SMF determines the third duration based on the second duration. The third duration herein is specifically duration in which the SMF buffers the downlink data of the UE in the inactive state.

Optionally, when the SMF determines to perform buffering in the UPF, the method further includes the following steps.

S307: The SMF sends indication information #4 to the UPF, where the indication information #4 indicates to buffer the downlink data of the UE in the inactive state in the UPF.

Correspondingly, the UPF receives the indication information #4 sent by the SMF, and buffers the downlink data of the UE.

It may be understood that before receiving the indication information #4, the UPF considers that the UE is in a connected state, and after receiving the indication information #4, the UPF may consider that the UE is in the inactive state.

In a specific implementation, a new trigger condition tag (Tag) is added to a buffering action rule (buffering action rule, BAR) in a packet detection rule (packet detection rule, PDR), and a value of the tag indicates whether the BAR is valid. For example, when the tag is 1 (that is, an example of the indication information #4), it may be considered that the UE enters the inactive state, the BAR takes effect, and the UPF buffers the downlink data of the UE in the inactive state in the UPF according to the BAR. When the tag is 0, it may be considered that the UE enters the connected state, the BAR is invalid, and the UPF stops buffering and delivers the buffered downlink data of the UE.

In another specific implementation, because eDRX sleep of the UE in the inactive state is performed in a fixed cycle, the UPF may buffer and deliver the downlink data of the UE based on the fixed cycle. For example, the SMF notifies the UPF to invalidate the BAR in a paging time window in the fixed cycle, and validate the BAR at another moment in the fixed cycle. In this case, the UPF buffers the downlink data of the UE within a BAR validity period corresponding to the fixed cycle, and delivers the buffered downlink data of the UE within a BAR invalidity period corresponding to the fixed cycle, thereby reducing signaling overheads.

S308: The UPF sends indication information #5 to the RAN, where the indication information #5 indicates that the downlink data of the UE is buffered in the UPF.

In a specific implementation, the UPF adds the indication information #5 to a user plane data packet on the RAN side, or creates a null data packet to add the indication information #5, and sends the data packet to the RAN. Correspondingly, if the data packet is a null data packet, the RAN directly discards the null data packet.

Optionally, if buffering is performed in the UPF, only one of the indication information #5 and the indication information #3 may be sent.

Optionally, when the SMF determines to perform buffering in the UPF, the SMF determines the third duration based on the second duration, and sends the third duration to the UPF. The third duration herein is specifically duration for buffering the downlink data of the UE in the UPF.

S309: The RAN indicates the UE to enter the inactive state.

Optionally, the RAN may indicate the UE to enter the inactive state before or after sending the information #1 or when sending the information #1. For a reason, refer to the description in S202. Details are not described herein again.

Optionally, if the AMF determines, in S304, that the downlink data of the UE cannot be buffered in the core network element, the RAN may indicate the UE to enter the inactive state after receiving the indication information #1.

Optionally, if the AMF determines to buffer the downlink data of the UE in the core network element in S304, the RAN may indicate the UE to enter the inactive state after receiving the indication information #3 or the indication information #5.

In the foregoing technical solution, through information exchange between the RAN and the AMF, it can be ensured that the core network can perceive a CM state change of the UE, that is, the core network element can perceive that the UE enters the inactive state from the connected state, and help the access network side buffer the downlink data in the inactive state. In this way, storage pressure of data buffering on the access network side can be relieved.

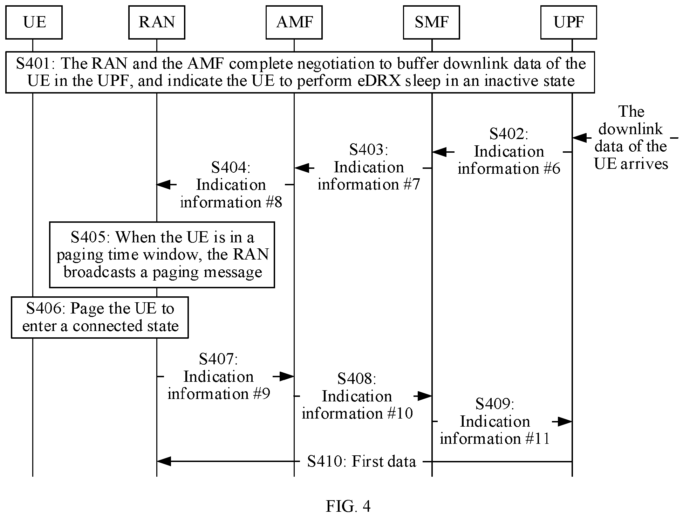

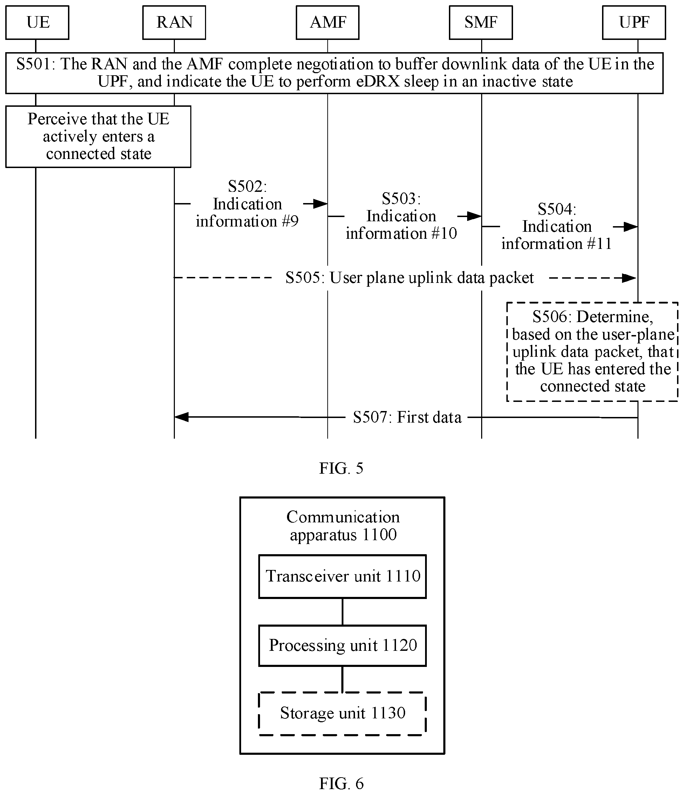

FIG. 3 specifically describes a procedure in which a RAN negotiates with a core network element to buffer downlink data of UE. After buffering the downlink data of the UE, the core network element may deliver the buffered data of the UE in two manners: active delivery and passive delivery. The following specifically describes specific procedures corresponding to the two delivery manners with reference to FIG. 4 and FIG. 5.

### Manner 1: active delivery

Refer to FIG. 4. FIG. 4 is a schematic flowchart of another communication method according to this application. For example, this embodiment is described by using an example in which a UPF buffers downlink data of UE.

S401: A RAN and an AMF complete negotiation to buffer the downlink data of the UE in the UPF, and drive the UE to perform eDRX sleep in an inactive state. For a specific procedure, refer to the procedure corresponding to FIG. 3. Details are not described herein again.

S402: When the downlink data of the UE arrives at a UPF side, the UPF sends indication information #6 to an SMF, where the indication information #6 indicates that the downlink data of the UE has arrived. Correspondingly, the SMF receives the indication information #6 sent by the UPF.

The indication information #6 may also be understood as that the downlink data of the UE has arrived and has started to be buffered on the UPF side.

S403: The SMF sends indication information #7 to the AMF, where the indication information #7 indicates that the downlink data of the UE is buffered in a core network element.

Correspondingly, the AMF receives the indication information #7 sent by the SMF.

Optionally, the SMF further sends query information #2 to the AMF, where the query information #2 is used to query a current CM state of the UE. To be specific, the SMF queries the AMF for whether the UE is still in the inactive state at this moment, or when the UE in the inactive state is in a reachable state. That the UE in the inactive state is in the reachable state means that the RAN can page the UE to enter a connected state.

S404: The AMF sends indication information #8 to the RAN, where the indication information #8 indicates that the downlink data of the UE is buffered in the core network element.

Correspondingly, the RAN receives the indication information #8 sent by the AMF, and determines that the core network side has the buffered data of the UE to be sent.

S405: After a period of time, when the UE is in a paging time window, the RAN broadcasts a paging message in a corresponding paging slot, where the paging message is used to page the UE to enter the connected state.

S406: The UE monitors the paging message in the paging slot in the corresponding paging time window, and enters the connected state based on the paging message.

S407: The RAN sends indication information #9 to the AMF, where the indication information #9 indicates that the UE is in the connected state or that the UE enters the connected state from the inactive state. Correspondingly, the AMF receives the indication information #9 sent by the RAN.

S408: The AMF sends indication information #10 to the SMF, where the indication information #10 is used to notify that the UE is in the connected state or that the UE enters the connected state from the inactive state. Correspondingly, the SMF receives the indication information #10 sent by the AMF.

It may be understood that before receiving the indication information #10, the SMF considers that the UE is in the inactive state, and after receiving the indication information #10, the SMF considers that the UE is in the connected state.

Optionally, the indication information #8 in S404 may alternatively indicate the RAN to confirm whether the UE is in the reachable state. Then, when the UE is in the reachable state, the RAN performs S407 and S408. Both the indication information #9 and the indication information #10 indicate that the UE in the inactive state is in the reachable state.

S409: The SMF sends indication information #11 to the UPF, where the indication information #11 indicates the UPF to send first data to the RAN, and the first data is the downlink data of the UE buffered in the UPF.

It may be understood that before receiving the indication information #11, the UPF considers that the UE is in the inactive state, and after receiving the indication information #11, the UPF considers that the UE is in the connected state, or that the UE enters the connected state from the inactive state, or that the UE in the inactive state is in the reachable state.

In a specific implementation, the SMF modifies the trigger condition tag newly added to the BAR in S307 to 0 (that is, an example of the indication information #11), to indicate that the BAR is invalid, and the UPF executes a corresponding forwarding action rule (forwarding action rule, FAR) to forward the first data to the RAN. It may be understood that the corresponding tag being 0 indicates that the buffering action rule is invalid. Therefore, before the buffering action rule is valid, the UPF stops buffering the downlink data of the UE. If downlink data of the UE arrives, the UPF directly forwards the downlink data to the RAN.

S410: The UPF sends the first data to the RAN.

Correspondingly, the RAN receives the first data, and then the RAN forwards the first data to the UE.

Optionally, if the UPF does not receive the indication information #11, and buffering time of the first data in the core network element exceeds third duration, the UPF directly delivers or discards the downlink first data.

In the foregoing technical solution, when buffering the data, the UPF notifies the RAN that the core network side has the buffered downlink data of the UE to be sent, to ensure that a paging procedure on the RAN side is triggered when the UE is reachable, and ensure that the buffered downlink data can be delivered to the UE in a timely manner.

### Manner 2: passive delivery

Refer to FIG. 5. FIG. 5 is a schematic flowchart of a communication method according to this application. For example, this embodiment is described still by using an example in which a UPF buffers downlink data of UE.

S501: A RAN and an AMF complete negotiation to buffer the downlink data of the UE in the UPF, and drive the UE to perform eDRX sleep in an inactive state. For a specific procedure, refer to the procedure corresponding to FIG. 3. Details are not described herein again.

S502: The RAN perceives that the UE actively enters a connected state, and the RAN sends indication information #9 to the AMF, where the indication information #9 indicates that the UE is in the connected state.

Optionally, the UE actively enters the connected state due to a reason such as a RAN notification area update (RAN notification area update, RNAU) and uplink data triggering.

S503: The AMF sends indication information #10 to an SMF, where the indication information #10 is used to notify that the UE is in the connected state or that the UE enters the connected state from the inactive state.

S504: The SMF sends indication information #11 to the UPF, where the indication information #11 indicates the UPF to send first data to the RAN. Then, the UPF performs S507 based on the indication information #11.

For specific descriptions of S503 and S504, refer to the descriptions of S408 and S409. Details are not described herein again.

Optionally, in the method, S502 to S504 may not be performed, but S505 and S506 may be performed.

S505: The RAN sends an uplink data packet from the RAN to the UPF.

S506: The UPF determines, based on the uplink data packet from the RAN, that the UE has entered the connected state. Then, the UPF performs S507.

Optionally, the uplink data herein may be an uplink data packet sent by the UE, or may be a null data packet constructed and sent by the RAN to notify, by using a user plane, the UPF that the UE has entered the connected state. If the uplink data is the null data packet, the UPF directly discards the null data packet.

S507: The UPF sends the first data to the RAN, where the first data is downlink data of the UE buffered in the UPF.

Correspondingly, the RAN receives the first data, and then the RAN forwards the first data to the UE.

In a specific implementation, the UPF determines, based on user plane uplink data, that the UE enters the connected state from the inactive state, and the UPF modifies the trigger condition tag newly added to the BAR in S307 to 0, to indicate that the BAR is invalid. The UPF performs a corresponding FAR to forward the first data to the RAN.

In the foregoing technical solution, the RAN notifies the core network side of a state change of the UE in a timely manner. If the core network side has buffered the downlink data of the UE in the inactive state, when the UE enters the connected state, the core network element sends the buffered data to the RAN side, to ensure that the buffered downlink data can be delivered to the UE in a timely manner.

It should be noted that, in embodiments of this application, specific procedures in which the SMF and the UPF buffer the downlink data of the UE in the inactive state are provided. However, in practice, the core network element configured to buffer the downlink data of the UE may alternatively be an NEF. This is not specifically limited in this application.

It should be further noted that, in embodiments of this application, a network element #2 is used as a relay network element between a network element #1 and a network element #3, and the network element #2 needs to transfer, to the network element #3, indication information A sent by the network element #1. After the network element #2 receives the indication information A sent by the network element #1, information sent to the network element #3 may be actually not the previous indication information A, but may be indication information B. However, the indication information B and the indication information A indicate a same meaning. In this case, this application may also be described as follows: The network element #1 sends the indication information A to the network element #3 through the network element #2. Alternatively, the network element #1 sends the indication information A to the network element #2, and the network element #2 sends the indication information A to the network element #3. Alternatively, there may be some other equivalent descriptions.

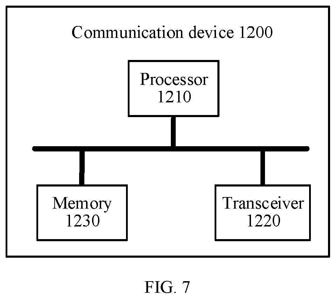

The method provided in embodiments of this application is described in detail above with reference to FIG. 2 to FIG. 5. The communication apparatus provided in embodiments of this application is described below in detail with reference to FIG. 6 and FIG. 7. It should be understood that descriptions of apparatus embodiments correspond to the descriptions of the method embodiments. Therefore, for content that is not described in detail, refer to the foregoing method embodiments. For brevity, details are not described herein again.

In embodiments of this application, a transmitting end device or a receiving end device may be divided into function modules according to the foregoing method examples. For example, each function module may be obtained through division based on each corresponding function, or two or more functions may be integrated into one processing module. The integrated module may be implemented in a form of hardware, or may be implemented in a form of a software function module. It should be noted that division into the modules in embodiments of this application is an example, and is merely logical function division. During actual implementation, there may be another division manner. An example in which each function module is obtained through division based on each corresponding function is used below for description.

FIG. 6 is a block diagram of a communication apparatus 1100 according to an embodiment of this application. As shown in the figure, the communication apparatus 1100 may include a transceiver unit 1110 and a processing unit 1120.

In a possible design, the communication apparatus 1100 may be the access network device in the foregoing method embodiments, or may be a chip configured to implement a function of the access network device in the foregoing method embodiments.

It should be understood that the communication apparatus 1100 may correspond to the access network device in the methods in the embodiments corresponding to FIG. 2 to FIG. 5 in this application. The communication apparatus 1100 may include units configured to perform the methods performed by the access network device in the methods in the embodiments corresponding to FIG. 2 to FIG. 5. In addition, the units in the communication apparatus 1100 and the foregoing other operations and/or functions are separately used to implement corresponding procedures of the methods in the embodiments corresponding to FIG. 2 to FIG. 5. It should be understood that a specific process in which the units perform the foregoing corresponding steps is described in detail in the foregoing method embodiments. For brevity, details are not described herein.

In another possible design, the communication apparatus 1100 may be the AMF network element in the foregoing method embodiments, or may be a chip configured to implement a function of the AMF network element in the foregoing method embodiments.

It should be understood that the communication apparatus 1100 may correspond to the AMF network element in the methods in the embodiments corresponding to FIG. 2 to FIG. 5 in this application. The communication apparatus 1100 may include units configured to perform the methods performed by the AMF network element in the methods in the embodiments corresponding to FIG. 2 to FIG. 5. In addition, the units in the communication apparatus 1100 and the foregoing other operations and/or functions are separately used to implement corresponding procedures of the methods in the embodiments corresponding to FIG. 2 to FIG. 5. It should be understood that a specific process in which the units perform the foregoing corresponding steps is described in detail in the foregoing method embodiments. For brevity, details are not described herein.

In another possible design, the communication apparatus 1100 may be the SMF network element in the foregoing method embodiments, or may be a chip configured to implement a function of the SMF network element in the foregoing method embodiments.

It should be understood that the communication apparatus 1100 may correspond to the SMF network element in the methods in the embodiments corresponding to FIG. 2 to FIG. 5 in this application. The communication apparatus 1100 may include units configured to perform the methods performed by the SMF network element in the methods in the embodiments corresponding to FIG. 2 to FIG. 5. In addition, the units in the communication apparatus 1100 and the foregoing other operations and/or functions are separately used to implement corresponding procedures of the methods in the embodiments corresponding to FIG. 2 to FIG. 5. It should be understood that a specific process in which the units perform the foregoing corresponding steps is described in detail in the foregoing method embodiments. For brevity, details are not described herein.

In another possible design, the communication apparatus 1100 may be the UPF network element in the foregoing method embodiments, or may be a chip configured to implement a function of the UPF network element in the foregoing method embodiments.

It should be understood that the communication apparatus 1100 may correspond to the UPF network element in the methods in the embodiments corresponding to FIG. 2 to FIG. 5 in this application. The communication apparatus 1100 may include units configured to perform the methods performed by the UPF network element in the methods in the embodiments corresponding to FIG. 2 to FIG. 5. In addition, the units in the communication apparatus 1100 and the foregoing other operations and/or functions are separately used to implement corresponding procedures of the methods in the embodiments corresponding to FIG. 2 to FIG. 5. It should be understood that a specific process in which the units perform the foregoing corresponding steps is described in detail in the foregoing method embodiments. For brevity, details are not described herein.

It should be further understood that the transceiver unit 1110 in the communication apparatus 1100 may correspond to a transceiver 1220 in a communication device 1200 shown in FIG. 7, and the processing unit 1120 in the communication apparatus 1100 may correspond to a processor 1210 in the communication device 1200 shown in FIG. 7.

It should be further understood that, when the communication apparatus 1100 is a chip, the chip includes a transceiver unit and a processing unit. The transceiver unit may be an input/output circuit or a communication interface. The processing unit may be a processor, a microprocessor, or an integrated circuit integrated on the chip. The transceiver unit 1110 is configured to implement signal receiving and sending operations of the communication apparatus 1100, and the processing unit 1120 is configured to implement a signal processing operation of the communication apparatus 1100.

Optionally, the communication apparatus 1100 further includes a storage unit 1130, and the storage unit 1130 is configured to store instructions.

FIG. 7 is a block diagram of a communication device 1200 according to an embodiment of this application. As shown in the figure, the communication device 1200 includes at least one processor 1210 and a transceiver 1220. The processor 1210 is coupled to a memory, and is configured to execute instructions stored in the memory, to control the transceiver 1220 to send a signal and/or receive a signal.

Optionally, the communication device 1200 further includes a memory 1230, configured to store instructions.

It should be understood that the processor 1210 and the memory 1230 may be combined into one processing apparatus, and the processor 1210 is configured to execute program code stored in the memory 1230 to implement the foregoing functions. During specific implementation, the memory 1230 may be integrated into the processor 1210, or may be independent of the processor 1210.

It should be further understood that the transceiver 1220 may include a receiver (or referred to as a receiver machine) and a transmitter (or referred to as a transmitter machine). The transceiver 1220 may further include one or more antennas. The transceiver 1220 may be a communication interface or an interface circuit.

When the communication device 1200 is a chip, the chip includes a transceiver unit and a processing unit. The transceiver unit may be an input/output circuit or a communication interface. The processing unit may be a processor, a microprocessor, or an integrated circuit integrated on the chip.

An embodiment of this application further provides a processing apparatus, including a processor and an interface. The processor may be configured to perform the methods in the foregoing method embodiments.

It should be understood that the processing apparatus may be a chip. For example, the processing apparatus may be a field programmable gate array (field programmable gate array, FPGA), an application-specific integrated circuit (application-specific integrated circuit, ASIC), a system on a chip (system on a chip, SoC), a central processing unit (central processing unit, CPU), a network processor (network processor, NP), a digital signal processing circuit (digital signal processor, DSP), a micro controller unit (micro controller unit, MCU), a programmable logic device (programmable logic device, PLD), or another integrated chip.

In an implementation process, steps in the foregoing methods can be implemented by using a hardware integrated logic circuit in the processor, or by using instructions in a form of software. The steps of the method disclosed with reference to embodiments of this application may be directly performed by a hardware processor, or may be performed by a combination of hardware and software modules in the processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps of the foregoing method in combination with hardware of the processor. To avoid repetition, details are not described herein again.

It should be noted that, the processor in embodiments of this application may be an integrated circuit chip, and has a signal processing capability. In an implementation process, steps in the foregoing method embodiments can be implemented by using a hardware integrated logic circuit in the processor, or by using instructions in a form of software. The processor may be a general-purpose processor, a digital signal processor (DSP), an application-specific integrated circuit (ASIC), a field programmable gate array (FPGA) or another programmable logical device, a discrete gate or transistor logic device, or a discrete hardware component. The processor may implement or perform the methods, steps, and logical block diagrams that are disclosed in embodiments of this application. The general-purpose processor may be a microprocessor, or the processor may be any conventional processor or the like. The steps of the methods disclosed with reference to embodiments of this application may be directly performed by a hardware decoding processor, or performed by a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps of the foregoing method in combination with hardware of the processor

It may be understood that the memory in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example and not limitation, many forms of RAMs are available, such as a static random access memory (static RAM, SRAM), a dynamic random access memory (dynamic RAM, DRAM), a synchronous dynamic random access memory (synchronous DRAM, SDRAM), double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory for the system and the method described in this specification aims to include but is not limited to these memories and any memory of another appropriate type.

According to the method provided in embodiments of this application, this application further provides a computer program product. The computer program product includes computer program code. When the computer program code is run on a computer, the computer is enabled to perform the method in either of the embodiments shown in FIG. 5 to FIG. 10.

According to the method provided in embodiments of this application, this application further provides a computer-readable medium. The computer-readable medium stores program code. When the program code is run on a computer, the computer is enabled to perform the method in either of the embodiments shown in FIG. 5 to FIG. 10.

According to the method provided in embodiments of this application, this application further provides a system, including the foregoing access network device, AMF network element, SMF network element, and UPF network element.

According to the method provided in embodiments of this application, this application further provides a system, including the foregoing access network device, AMF network element, and SMF network element.

All or some of the foregoing embodiments may be implemented by software, hardware, firmware, or any combination thereof. When software is used to implement the embodiments, all or some of the embodiments may be implemented in a form of a computer program product. The computer program product includes one or more computer instructions. When the computer instructions are loaded and executed on a computer, the procedures or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid state disk (solid state disk, SSD)), or the like.

A network side device and a terminal device in the apparatus embodiments correspond to a network side device or a terminal device in the method embodiments. A corresponding module or unit performs a corresponding step. For example, a communication unit (a transceiver) performs a receiving step or a sending step in the method embodiments, and a step other than the sending step and the receiving step may be performed by a processing unit (a processor). For a function of a specific unit, refer to a corresponding method embodiment. There may be one or more processors

Terminologies such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or an execution thread, and a component may be located on one computer and/or distributed between two or more computers. In addition, these components may be executed from various computer-readable media that store various data structures. For example, the components may communicate by using a local process and/or a remote process based on a signal having one or more data packets (for example, data from two components interacting with another component in a local system, a distributed system, and/or across a network, such as the internet interacting with other systems by using the signal).

A person of ordinary skill in the art may be aware that, in combination with the examples described in embodiments disclosed in this specification, units and algorithm steps may be implemented by electronic hardware or a combination of computer software and electronic hardware. Whether the functions are implemented by hardware or software depends on specific applications and design constraints of the technical solutions. A person skilled in the art may use different methods to implement the described functions for each particular application, but it should not be considered that the implementation goes beyond the scope of this application.

It may be clearly understood by a person skilled in the art that, for convenience and brevity of description, for a specific working process of the foregoing described system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, division into the units is merely logical function division. During actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces, and indirect couplings or communication connections between apparatuses or units may be implemented in an electrical, mechanical, or another form.

The units described as separate parts may or may not be physically separate, and parts displayed as units may or may not be physical units, may be located in one place, or may be distributed on a plurality of network units. Some or all of the units may be selected according to an actual requirement to achieve the objectives of the solutions in the embodiments.

In addition, function units in embodiments of this application may be integrated into one processing unit, or each unit may exist alone physically, or two or more units may be integrated into one unit.

When the function is implemented in a form of a software function unit and sold or used as an independent product, the function may be stored in a computer-readable storage medium. Based on such an understanding, the technical solutions of this application essentially, or the part contributing to the conventional technology, or some of the technical solutions may be implemented in a form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application. However, the protection scope of this application is not limited thereto. Any change or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
sending, by an access network device, first information, wherein the first information is used to trigger to buffer downlink data of a terminal in an inactive state in a core network element; and
sending, by the access network device, second information to the terminal, wherein the second information indicates the terminal to enter the inactive state.

2. The method according to claim 1, wherein
the first information comprises an eDRX parameter, the eDRX parameter is used by the terminal to sleep in the inactive state, and the eDRX parameter comprises an eDRX cycle; or
the first information comprises first duration, and the first duration is time determined by the access network device for buffering the downlink data of the terminal in the inactive state in the core network element.

3. The method according to claim 1 or 2, wherein the sending, by an access network device, first information comprises:
sending, by the access network device, the first information when an eDRX cycle of the terminal in the inactive state is greater than or equal to a first cycle threshold.

4. The method according to any one of claims 1 to 3, wherein the sending, by an access network device, first information comprises:
sending, by the access network device, the first information to an access and mobility management function network element, wherein the first information is used to trigger the access and mobility management function network element to determine to buffer the downlink data of the terminal in the inactive state in the core network element.

5. The method according to any one of claims 1 to 4, wherein the method further comprises:
sending, by the access network device, first indication information when the terminal enters a connected state, wherein the first indication information indicates that the terminal is in the connected state.

6. The method according to any one of claims 1 to 5, wherein the method further comprises:
receiving, by the access network device, second indication information, wherein the second indication information indicates that the downlink data of the terminal is buffered in the core network element; and
paging, by the access network device, the terminal based on the second indication information.

7. A communication method, comprising:
receiving, by an access and mobility management function network element, first information from an access network device, wherein the first information is used to trigger to buffer downlink data of a terminal in an inactive state in a core network element; and
sending, by the access and mobility management function network element, third indication information to a session management function network element based on the first information, wherein the third indication information indicates to buffer the downlink data of the terminal in the inactive state in the core network element.

8. The method according to claim 7, wherein
the first information comprises an eDRX parameter, the eDRX parameter is used by the terminal to sleep in the inactive state, and the eDRX parameter comprises an eDRX cycle; or
the first information comprises first duration, and the first duration is duration determined by the access network device for buffering the downlink data of the terminal in the inactive state in the core network element.

9. The method according to claim 7 or 8, wherein the method further comprises:
sending, by the access and mobility management function network element, second duration to the session management function network element, wherein the second duration is used to determine third duration, the third duration is duration determined by the session management function network element for buffering the downlink data of the terminal in the inactive state in the core network element, and the second duration is duration determined by the access and mobility management function network element for buffering the downlink data of the terminal in the inactive state in the core network element.

10. The method according to any one of claims 7 to 9, wherein the method further comprises:
sending, by the access and mobility management function network element, first query information to the session management function network element, wherein the first query information is used to query whether the core network element supports buffering of the downlink data of the terminal in the inactive state; and
receiving, by the access and mobility management function network element, fourth indication information from the session management function network element, wherein the fourth indication information is used to confirm that the core network element supports buffering of the downlink data of the terminal in the inactive state.

11. A communication method, comprising:
receiving, by a core network element, third indication information, wherein the third indication information indicates to buffer downlink data of a terminal in an inactive state in the core network element; and
buffering, by the core network element, the downlink data of the terminal in the inactive state in the core network element based on the third indication information.

12. The method according to claim 11, wherein the method further comprises:
receiving, by the core network element, first indication information, wherein the first indication information indicates that the terminal is in a connected state; and
sending, by the core network element to an access network device based on the first indication information, the downlink data of the terminal buffered in the core network element.

13. The method according to claim 11 or 12, wherein the method further comprises:
sending, by the core network element, fifth indication information when the downlink data of the terminal arrives at the core network element, wherein the fifth indication information indicates that the downlink data of the terminal arrives at the core network element and the core network element has started to buffer the downlink data of the terminal.

14. The method according to any one of claims 11 to 13, wherein the method further comprises:
directly delivering or discarding, by the core network element, the buffered downlink data of the terminal when buffering time of the downlink data of the terminal in the inactive state in the core network element exceeds third duration, wherein the third duration is duration determined by a session management function network element for buffering the downlink data of the terminal in the inactive state in the core network element.

15. The method according to any one of claims 11 to 13, wherein the core network element is a session management function network element, and the method further comprises:
receiving, by the core network element, first query information from an access and mobility management function network element, wherein the first query information is used to query whether the core network element supports buffering of the downlink data of the terminal; and
sending, by the core network element, fourth indication information to the access and mobility management function network element, wherein the fourth indication information is used to confirm that the core network element supports buffering of the downlink data of the terminal in the inactive state.

16. The method according to any one of claims 1 to 15, wherein the core network element is the session management function network element or a user plane function network element.

17. A communication apparatus, comprising:
a sending unit, configured to send first information, wherein the first information is used to trigger to buffer downlink data of a terminal in an inactive state in a core network element, wherein
the sending unit is further configured to send second information to the terminal, wherein the second information indicates the terminal to enter the inactive state.

18. The apparatus according to claim 17, wherein
the first information comprises an eDRX parameter, the eDRX parameter is used by the terminal to sleep in the inactive state, and the eDRX parameter comprises an eDRX cycle; or
the first information comprises first duration, and the first duration is time determined by the communication apparatus for buffering the downlink data of the terminal in the inactive state in the core network element.

19. The apparatus according to claim 17 or 18, wherein the sending unit is specifically configured to send the first information when an eDRX cycle of the terminal in the inactive state is greater than or equal to a first cycle threshold.

20. The apparatus according to any one of claims 17 to 19, wherein the sending unit is specifically configured to send the first information to an access and mobility management function network element, wherein the first information is used to trigger the access and mobility management function network element to determine to buffer the downlink data of the terminal in the inactive state in the core network element.

21. The apparatus according to any one of claims 17 to 20, wherein the sending unit is further configured to send first indication information when the terminal enters a connected state, wherein the first indication information indicates that the terminal is in the connected state.

22. The apparatus according to any one of claims 17 to 21, wherein the apparatus further comprises:
a receiving unit, configured to receive second indication information, wherein the second indication information indicates that the downlink data of the terminal is buffered in the core network element; and
a processing unit, configured to page the terminal based on the second indication information.

23. A communication apparatus, comprising:
a receiving unit, configured to receive first information from an access network device, wherein the first information is used to trigger to buffer downlink data of a terminal in an inactive state in a core network element; and
a processing unit, configured to send third indication information to a session management function network element based on the first information, wherein the third indication information indicates to buffer the downlink data of the terminal in the inactive state in the core network element.

24. The apparatus according to claim 23, wherein
the first information comprises an eDRX parameter, the eDRX parameter is used by the terminal to sleep in the inactive state, and the eDRX parameter comprises an eDRX cycle; or
the first information comprises first duration, and the first duration is duration determined by the access network device for buffering the downlink data of the terminal in the inactive state in the core network element.

25. The apparatus according to claim 23 or 24, wherein the apparatus further comprises:
a sending unit, configured to send second duration to the session management function network element, wherein the second duration is used to determine third duration, the third duration is duration determined by the session management function network element for buffering the downlink data of the terminal in the inactive state in the core network element, and the second duration is duration determined by the communication apparatus for buffering the downlink data of the terminal in the inactive state in the core network element.

26. The apparatus according to any one of claims 23 to 25, wherein
the sending unit is further configured to send first query information to the session management function network element, wherein the first query information is used to query whether the core network element supports buffering of the downlink data of the terminal in the inactive state; and
the receiving unit is further configured to receive fourth indication information from the session management function network element, wherein the fourth indication information is used to confirm that the core network element supports buffering of the downlink data of the terminal in the inactive state.

27. A communication apparatus, comprising:
a receiving unit, configured to receive third indication information, wherein the third indication information indicates to buffer downlink data of a terminal in an inactive state in a core network element; and
a processing unit, configured to buffer the downlink data of the terminal in the inactive state in the core network element based on the third indication information.

28. The apparatus according to claim 27, wherein
the receiving unit is further configured to receive first indication information, wherein the first indication information indicates that the terminal is in a connected state; and
the processing unit is further configured to send, to an access network device based on the first indication information, the downlink data of the terminal buffered in the core network element.

29. The apparatus according to claim 27 or 28, wherein the apparatus further comprises:
a sending unit, configured to send fifth indication information when the downlink data of the terminal arrives at the core network element, wherein the fifth indication information indicates that the downlink data of the terminal arrives at the core network element and the core network element has started to buffer the downlink data of the terminal.

30. The apparatus according to any one of claims 27 to 29, wherein
when buffering time of the downlink data of the terminal in the inactive state in the core network element exceeds third duration, the sending unit delivers the downlink data of the terminal or the processing unit discards the buffered downlink data of the terminal, wherein the third duration is duration determined by a session management function network element for buffering the downlink data of the terminal in the inactive state in the core network element.

31. The apparatus according to any one of claims 27 to 29, wherein the communication apparatus is a session management function network element, and the apparatus further comprises:
the receiving unit, further configured to receive first query information from an access and mobility management function network element, wherein the first query information is used to query whether the core network element supports buffering of the downlink data of the terminal; and
the sending unit, further configured to send fourth indication information to the access and mobility management function network element, wherein the fourth indication information is used to confirm that the core network element supports buffering of the downlink data of the terminal in the inactive state.

32. A communication apparatus, comprising at least one processor, wherein the at least one processor is coupled to at least one memory, and the at least one processor is configured to execute a computer program or instructions stored in the at least one memory, so that the communication apparatus performs the method according to any one of claims 1 to 6, or the communication apparatus performs the method according to any one of claims 7 to 10, or the communication apparatus performs the method according to any one of claims 11 to 15.

33. A computer-readable storage medium, wherein the computer-readable storage medium stores computer instructions, and when the computer instructions are run on a computer, the method according to any one of claims 1 to 6 is performed, or the method according to any one of claims 7 to 10 is performed, or the method according to any one of claims 11 to 15 is performed.

34. A computer program product, wherein the computer program product comprises computer program code, and when the computer program code is run on a computer, the method according to any one of claims 1 to 6 is performed, or the method according to any one of claims 7 to 10 is performed, or the method according to any one of claims 11 to 15 is performed.

35. A communication system, comprising an access network device, an access and mobility management function network element, and a core network element, wherein
the access network device is configured to perform the method according to any one of claims 1 to 6;
the access and mobility management function network element is configured to perform the method according to any one of claims 7 to 10; and
the core network element is configured to perform the method according to any one of claims 11 to 15.

36. A communication method, comprising:
sending, by an access network device, first information, wherein the first information is used to trigger to buffer downlink data of a terminal in an inactive state in a core network element;
sending, by the access network device, second information to the terminal, wherein the second information indicates the terminal to enter the inactive state;
receiving, by an access and mobility management function network element, the first information from the access network device;
sending, by the access and mobility management function network element, third indication information to a session management function network element based on the first information, wherein the third indication information indicates to buffer the downlink data of the terminal in the inactive state in the core network element;
receiving, by the core network element, the third indication information; and
buffering, by the core network element, the downlink data of the terminal in the inactive state in the core network element based on the third indication information.
